(19) Europäisches Patentamt
European Patent Office
Office européen des brevets

(11) **EP 2 536 236 A1**

(12) **EUROPEAN PATENT APPLICATION**
published in accordance with Art. 153(4) EPC

(43) Date of publication:
**19.12.2012 Bulletin 2012/51**

(51) Int Cl.:
***H04W 72/04*** (2009.01)

(21) Application number: **11742070.3**

(22) Date of filing: **14.01.2011**

(86) International application number:
**PCT/JP2011/050570**

(87) International publication number:
**WO 2011/099321 (18.08.2011 Gazette 2011/33)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **12.02.2010 JP 2010028531**

(71) Applicant: **Sharp Kabushiki Kaisha
Osaka-shi, Osaka 545-8522 (JP)**

(72) Inventors:
• **TAKAHASHI Hiroki**
**Osaka 545-8522 (JP)**

• **HAMAGUCHI, Yasuhiro**
**Osaka 545-8522 (JP)**
• **YOKOMAKURA, Kazunari**
**Osaka 545-8522 (JP)**
• **NAKAMURA, Osamu**
**Osaka 545-8522 (JP)**
• **GOTO, Jungo**
**Osaka 545-8522 (JP)**

(74) Representative: **Müller - Hoffmann & Partner
Patentanwälte
Innere Wiener Strasse 17
81667 München (DE)**

(54) **BASE STATION DEVICE, MOBILE STATION DEVICE, AND INTEGRATED CIRCUIT**

(57)    A high spectrum efficiency is achieved even in a system where mobile station apparatuses with different units of assignment coexist. A base station apparatus, which performs radio communication with a mobile station apparatus, newly defines a minimum unit of assignment for each of the mobile station apparatuses, determines band assignment, and notifies each of the mobile station apparatuses of assignment information, when a mobile station apparatus with an RB (Resource Block) being a minimum unit of assignment and a mobile station apparatus with an RBG (RB Group) being a minimum unit of assignment coexist. In addition, the minimum unit of is newly defined by defining the number of RBs constituting an RBG for each mobile station apparatus.

*FIG.4*

**Description**

Technical Field

The present invention relates to a base station apparatus, a mobile station apparatus, and an integrated circuit.

Background Art

With the recent increase of the amount of data communication, there is increasing need for mobile communication systems having a higher spectrum efficiency. In such a circumstance, standardization of LTE (Long Term Evolution), which is referred to as the 3. 9 generation radio communication standard, has been completed, and standardization of LTE-A (also referred to as LTE-Advanced, IMT-A, etc.) is underway, which is expected to be the next generation standard subsequent to LTE. In the uplink (communication from a mobile station apparatus to a base station apparatus) of a mobile communication system using the above-mentioned radio communication standard, it is generally necessary for a mobile station apparatus to maintain high the power usage efficiency of the amplifier with a limited transmit power, and therefore a communication system using a single carrier having a good PAPR (Peak to Average Power Ratio) characteristic is suitable. In LTE, for example, a SC-FDMA (Single Carrier Frequency Division Multiple Access) system is used, which assigns a single carrier spectrum to contiguous frequencies in the frequency domain. SC-FDMA is also referred to as DFT-S-OFDM (Discrete Fourier Transform Spread Orthogonal Frequency Division Multiplexing), DFT-precoded OFDM, OFDM with DFT Precoding, or the like.

In LTE-A, on the other hand, it has been determined that a transmission scheme as referred to as Clustered DFT-S-OFDM (also referred to as DSC (Dynamic Spectrum Control), SC-ASA (Single Carrier Adaptive Spectrum Allocation), DFT-S-OFDM with SDC (Spectrum Division Control) or the like), which divides a spectrum of SC-FDMA into clusters including a plurality of subcarriers and allocates each cluster in arbitrary frequency band, will be newly supported in addition to a SC-FDMA system which is similar to LTE. Clustered DFT-S-OFDM is significantly different from SC-FDMA in that spectra are discretely allocated in units of clusters in the frequency domain, thereby allowing more flexible scheduling than SC-FDMA so that improvement of characteristics and band usage efficiency can be expected. On the other hand, since the PAPR characteristic degrades as the number of cluster divisions increases, Clustered DFT-S-OFDM can be applied only to mobile station apparatuses having surplus amplifier back-off.

In the uplink of an LTE-A system, therefore, it is assumed to use different communication systems such that Clustered DFT-S-OFDM is positively used for a mobile station apparatus having surplus power due to its proximity to a base station apparatus, whereas SC-FDMA is used for a mobile station apparatus with a limited transmit power such as at a cell edge, or an LTE-compatible mobile station apparatus (with LTE-A, backward compatibility to LTE is guaranteed).

Notification of assignment information of bands to be used in the uplink of an LTE system is provided to a mobile station apparatus when a signal referred to as a PDCCH (Physical Downlink Control Channel) is transmitted from a base station apparatus. The mobile station apparatus grasps the assignment information indicating which frequency is used to transmit by decoding an RA (Resource Allocation) field in DCI (Downlink Control Information) format included in the detected PDCCH. Since the assignment information has an RB (Resource Block) including 12 subcarriers as a minimum unit of assignment and there is only contiguous allocation of signals along the frequency axis according to SC-FDMA in the uplink, bits of the RA field are generated by specifying the leading RB number (index) of the assignment band and the number of contiguous RBs (see Non-patent document 1).

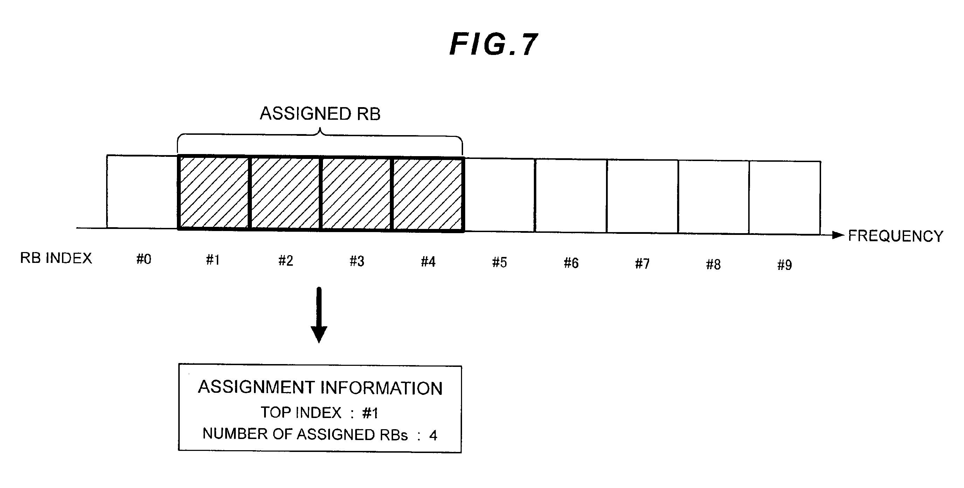

FIG. 7 illustrates an exemplary contiguous allocation for assignment of bands to be used in the uplink. A case is shown in FIG. 7 where a mobile station apparatus provides assignment to four contiguous RBs #1 to #4, for a system band in which ten RBs #0 to #9 are prepared. In this occasion, the base station apparatus notifies the mobile station apparatus that the leading RB index is #1 and the number of RBs is four so that the mobile station apparatus identifies the assigned band. The number of information bits required to provide notification of all the assignments by the above-mentioned notification method when the number of RBs that can be assigned in the system band is N is expressed by the following formula.

$$[\text{Formula 1}]$$

$$\text{ceil}(\log_2 (N(N+1)/2))$$

Here, ceil(X) is a ceiling function of X, expressing the smallest integer equal to or larger than X. Employing a specifying method as shown in formula (1) allows efficient notification of assignment information with a limited RA field size.

However, in LTE-A, the amount of control information may be larger than the case of contiguous allocation, since discrete allocation is supported also in the uplink as described above. In the LTE downlink in which discrete allocation is already supported, an RBG(RB Group) including a plurality of RB grouped therein is used instead of using an RB as a minimum unit of assignment. Assignment notification of discrete allocation is allowed by specifying in a bitmap whether or not each RBG can be assigned while attempting to reduce assignment information. Accordingly, it is sufficiently possible that a similar technique may be employed also in the uplink of LTE-A.

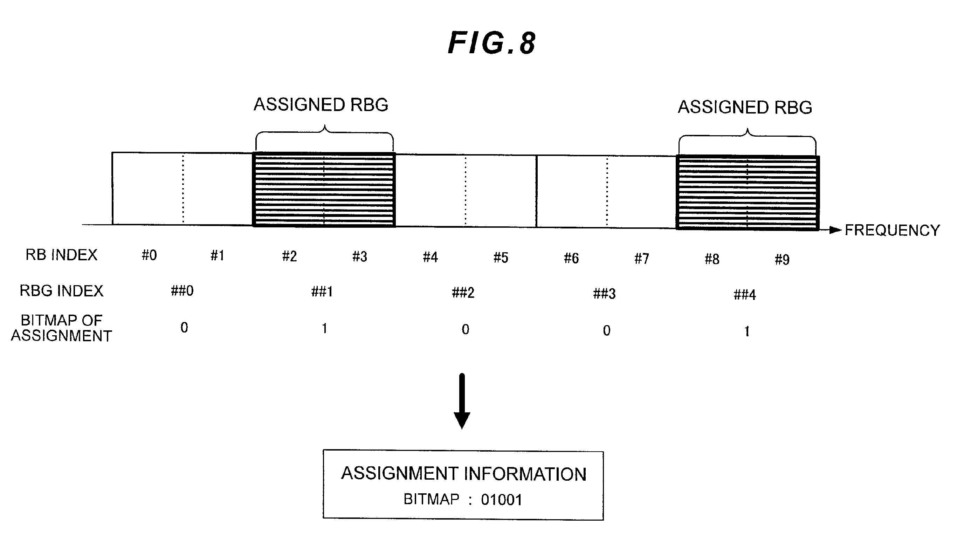

FIG. 8 illustrates an exemplary case where notification is provided using RBG when providing discrete allocation with regard to assignment of bands to be used in the uplink. In FIG. 7, uplink assignment is provided for a system band in which ten RBs #0 to #9 are prepared. In FIG. 8, on the other hand, RBGs ##0 to ##4 are set in the system band with the RBG size (the number of RBs included in the RBG) assumed to be two RBs, and uplink assignment is provided using these RBGs. When providing assignment to RBG##L (RBs #2 and #3) and RBG##4 (RBs #8 and #9), notification of assignment information is expressed by a 5-bit string "01001". Letting N be the number of assignable RBs in the system band and P the RBG size, the number of information bits required to provide notification of all the assignments by the above-mentioned notification method is expressed by the following formula.

$$[\text{Formula 2}]$$

$$\text{ceil}(N/P)$$

By specifying assignment in units of RBG as described above, notification of assignment can also be provided in discrete allocation which requires more complicated information, while suppressing the amount of information. As described above, it is conceivable that, in an LTE-A uplink system in which mobile station apparatuses using SC-FDMA and mobile station apparatuses using Clustered DFT-S-OFDM coexist, mobile station apparatuses having different assignment specification methods coexist in a manner such that either RB or RBG is the unit of assignment.

Prior art document

Non-patent document

Non-patent document 1: 3GPP TS 36.212 (V8.7.0) "Evolved Universal Terrestrial Radio Access(E-UTRA) Multiplexing and channel coding"

However, if a mobile station apparatus for which assignment is provided in units of RB and a mobile station apparatus for which assignment is provided in units of RBG coexist in a same system, there exists a problem that the freedom of assignment for the latter may be significantly limited, depending on the state of the assignment of the former.

It is an object of the present invention, which has been made in view of such circumstances, to provide a base station apparatus, a mobile station apparatus, and an integrated circuit to achieve a high spectrum efficiency even in a system in which mobile station apparatuses with different units of assignment coexist.

Disclosure of the Invention

(1) In order to achieve the above object, the present invention takes the following measures. Specifically, a base station apparatus of an embodiment of the present invention performs radio communication with a mobile station apparatus and is characterized in that, when a mobile station apparatus with an RB (Resource Block) being a minimum unit of assignment and a mobile station apparatus with an RBG (RB Group) being a minimum unit of assignment coexist, the base station apparatus newly defines a minimum unit of assignment for each of the mobile station apparatuses, determines band assignment, and notifies assignment information to each of the mobile station apparatuses.

As thus described, if mobile station apparatuses with an RB being a minimum unit of assignment and mobile station apparatuses with an RBG being a minimum unit of assignment coexist, it becomes possible to achieve a high spectrum efficiency also in a system in which mobile station apparatuses with different units of assignment coexist, since a minimum unit of assignment is newly defined for each of the mobile station apparatuses, band assignment is determined, and assignment information is notified to each of the mobile station apparatuses.

(2) In addition, the base station apparatus of an embodiment of the present invention is characterized in that it newly defines the minimum unit by defining the number of RBs constituting an RBG for each mobile station apparatus.

As thus described, since the base station apparatus newly defines a minimum unit for each of the mobile station apparatuses by defining the number of RBs constituting the RBG, it becomes possible to provide flexible scheduling, and improve the spectrum efficiency.

(3) In addition, the base station apparatus of an embodiment of the present invention is characterized in that it determines the number of RBs constituting the RBG, based on a communication bandwidth set for each of the mobile station apparatuses.

As thus described, since the number of RBs constituting the RBG is determined, based on a communication bandwidth set for each of the mobile station apparatuses, it becomes possible to reduce the number of unassignable bands due to difference of minimum units of assignment, and increase the band usage rate.

(4) In addition, the base station apparatus of an embodiment of the present invention is characterized in that it determines the number of RBs constituting the RBG based on communication quality of each of the mobile station apparatuses.

As thus described, since the number of RBs constituting the RBG is determined, based on communication quality of each of the mobile station apparatuses, it becomes possible to reduce the number of unassignable bands due to difference of minimum units of assignment, and increase the band usage rate.

(5) In addition, the base station apparatus of an embodiment of the present invention is characterized in that it divides an assignable band into a plurality of subbands, based on the number of RBs constituting the RBG, the number being defined for each of the mobile station apparatuses, assigns the RB or the RBG in any one subband to at least one of the mobile station apparatuses, and also notifies each of the mobile station apparatuses of information specifying the subband and assignment information in the subband.

As thus described, since the base station apparatus divides an assignable band into a plurality of subbands based on the number of RBs constituting the RBG, the number being defined for each mobile station apparatus, and assigns the RB or the RBG in any one subband to at least one of the mobile station apparatuses, it becomes possible to improve flexibility of scheduling and the spectrum efficiency. In addition, since notification of information specifying a subband and assignment information in the subband is provided to each of the mobile station apparatuses, it becomes possible to suppress increase of assignment information.

(6) In addition, the base station apparatus of an embodiment of the present invention is characterized in that it provides assignment to a mobile station apparatus to which assignment is allowed only in the subband, after completion of assignment to a mobile station apparatus other than the mobile station apparatus to which assignment is allowed only in the subband.

As thus described, since it provides assignment to a mobile station apparatus to which assignment is allowed only in the subband, after completion of assignment to a mobile station apparatus other than the mobile station apparatus to which assignment is allowed only in the subband, it becomes possible to reduce the number of unassignable bands due to difference of minimum units of assignment, and increase the band usage rate.

(7) In addition, the base station apparatus of an embodiment of the present invention is characterized in that assignment to a mobile station apparatus other than the mobile station apparatus to which assignment is allowed only in the subband is performed in descending order of the number of RBs constituting the RBG, the number being defined for each of the mobile station apparatuses.

As thus described, since assignment to a mobile station apparatus other than the mobile station apparatus to which assignment is allowed only in the subband is performed in descending order of the number of RBs constituting the RBG, the number being defined for each of the mobile station apparatuses, it becomes possible to reduce the number of unassignable bands due to difference of minimum units of assignment, and increase the band usage rate.

(8) In addition, the base station apparatus of an embodiment of the present invention is characterized in that it determines a subband to be assigned, based on channel characteristics of each of the mobile station apparatuses.

As thus described, since the subband to be assigned is determined based on the channel characteristics of each of the mobile station apparatuses, it becomes possible to reduce the number of unassignable bands due to difference of minimum units of assignment, and increase the band usage rate.

(9) In addition, the base station apparatus of an embodiment of the present invention is characterized in that it determines a subband to be assigned based on the number of frequencies assignable in the subband.

As thus described, since the subband to be assigned is determined based on the number of frequencies assignable in a subband, it becomes possible to reduce the number of unassignable bands due to difference of minimum units of assignment, and increase the band usage rate.

(10) In addition, the base station apparatus of an embodiment of the present invention is characterized in that it determines the number of RBs constituting the RBG for each of the mobile station apparatuses, based on a transmission mode of each of the mobile station apparatuses.

As thus described, since the number of RBs constituting the RBG is determined for each of the mobile station apparatuses, based on a transmission mode of each of the mobile station apparatuses, it becomes possible to effectively use RB over the entire system band, and improve the spectrum efficiency.

(11) In addition, the base station apparatus of an embodiment of the present invention is characterized in that it assigns the RB in accordance with the number of RBs constituting the RBG to a mobile station apparatus with the RB being a minimum unit of assignment.

As thus described, since assignment of the RB is provided for mobile station apparatuses with an RB being a minimum unit of assignment in accordance with the number of RBs constituting the RBG, it becomes possible to prevent a situation in which assignment is impossible despite that there exists a vacant RB in the RBG, and improve the spectrum efficiency.

(12) In addition, the base station apparatus of an embodiment of the present invention is characterized in that it assigns the RB to a mobile station apparatus with the RB being a minimum unit of assignment so that at least one of both ends of the assignment band coincides with one end of the RBG.

As thus described, since RBs are assigned to mobile station apparatuses with an RB being a minimum unit of assignment so that at least one of both ends of the assignment band coincides with one end of the RBG, it becomes possible to give a higher priority to the degree of freedom of assignment to the mobile station apparatus requesting contiguous allocation of RB.

(13) In addition, a mobile station apparatus of an embodiment of the present invention performs radio communication with the base station apparatus according to any one of items (1) to (12) described above and is characterized in that the mobile station apparatus is provided with a frequency resource from the base station apparatus to perform radio communication, with an RB (Resource Block) including one or more subcarriers or an RBG (RB Group) including one or more RBs being a minimum unit of assignment.

With this configuration, it becomes possible to configure a system which, when mobile station apparatuses with an RB being a minimum unit of assignment and mobile station apparatuses with an RBG being a minimum unit of assignment coexist, newly defines a minimum unit of assignment for each of the mobile station apparatuses, determines band assignment, and provides notification of assignment information to each of the mobile station apparatuses. Accordingly, it becomes possible to achieve a high spectrum efficiency even in a system in which mobile station apparatuses with different units of assignment coexist.

(14) In addition, an integrated circuit of an embodiment of the present invention, when being mounted on a base station apparatus, causes the base station apparatus to perform a plurality of functions and is characterized in that the integrated circuit causes the base station apparatus to perform a series of functions including functions of: performing radio communication with a mobile station apparatus; newly defining a minimum unit of assignment for each of the mobile station apparatuses when a mobile station apparatus with an RB (Resource Block) being a minimum unit of assignment and a mobile station apparatus with an RBG (RB Group) being a minimum unit of assignment coexist; and determining band assignment and notifying each of the mobile station apparatuses of assignment information.

As thus described, if mobile station apparatuses with an RB being a minimum unit of assignment and mobile station apparatuses with an RBG being a minimum unit of assignment coexist, it becomes possible to achieve a high spectrum efficiency even in a system in which mobile station apparatuses with different units of assignment coexist, since a minimum unit of assignment is newly determined for each of the mobile station apparatuses, band assignment is determined, and assignment information is notified to each of the mobile station apparatuses.

According to the present invention, flexible scheduling can be provided even in a mobile station apparatus that allows discrete allocation while suppressing increase of assignment information, and whereby it becomes possible to increase the band usage rate across the entire system.

Brief Description of the Drawings

FIG. 1 is a block diagram illustrating a configuration of a base station apparatus which notifies a mobile station apparatus of control information in the present invention;

FIG. 2 is a block diagram illustrating an exemplary transmitter configuration of a mobile station apparatus according to the present invention

FIG. 3 is an explanatory diagram of an exemplary uplink frequency band assignment to which the embodiments are supposed to be applied;

FIG. 4 illustrates assignment of an LTE-A mobile station apparatus E in FIG. 3 in the first embodiment of the present invention;

FIG. 5 illustrates an exemplary assignment of an LTE-A mobile station apparatus according to a second embodiment of the present invention;

FIG. 6 illustrates an example in which a first mobile station apparatus allowed for discrete allocation in units of RBG where 1RBG=4RB and a second mobile station apparatus allowed for only contiguous allocation in units of 1RB are assigned to a system band with a bandwidth of 20RB, in a third embodiment of the present invention;

FIG. 7 illustrates an exemplary case of contiguous allocation with regard to assignment of bands to be used in the uplink; and

FIG. 8 illustrates an exemplary case of a notification method using an RBG when providing discrete allocation with regard to assignment of bands to be used in the uplink.

Best Modes for Carrying Out the Invention

In the following, an embodiment for implementing the invention will be described, referring to the accompanying drawings. The following embodiment is a radio communication system in which a base station apparatus and a mobile station apparatus such as a cellular phone communicate with each other, with a minimum unit of frequencies that can be assigned to the mobile station apparatus by the base station apparatus being an integral multiple of RB. Although the uplink Clustered DFT-S-OFDM is described here, a communication system such as OFDM (Orthogonal Frequency Division Multiplexing) may be used since it is a notification method with regard to discrete allocation.

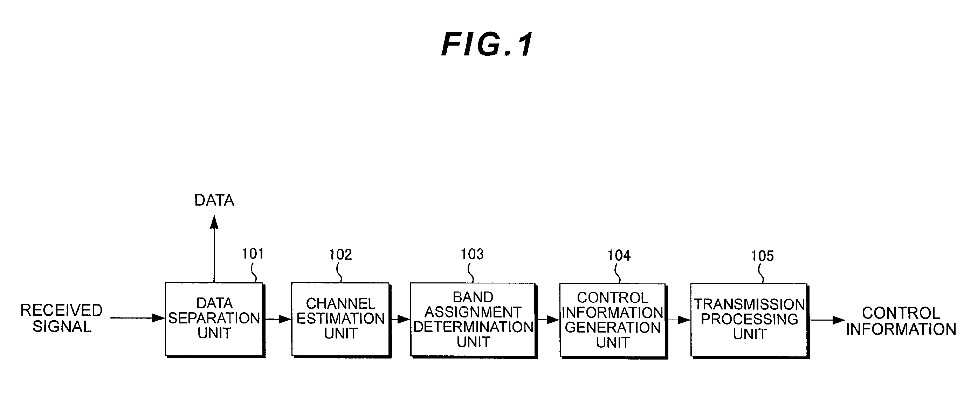

FIG. 1 is a block diagram illustrating a configuration of a base station apparatus which notifies a mobile station apparatus of control information in the present invention. The base station apparatus receives a multiplexed signal of a channel estimation signal and data transmitted from the mobile station apparatus. A data separation unit 101 separates the data to obtain a reference signal. The reference signal is input to a channel estimation unit 102. The channel estimation unit 102 estimates a frequency response of the channel from the reference signal, which is a known signal. The output of the channel estimation unit 102 is input to a band assignment determination unit 103. According to the estimated channel state information, the band assignment determination unit 103 determines band assignment used by the mobile station apparatus in the uplink. The band assignment information determined by the band assignment determination unit 103 is input to a control information generation unit 104, and the control information generation unit 104 generates control information including information such as modulation scheme, coding rate of error correcting codes, or the like. Notification of the generated control information is provided to the mobile station apparatus via a transmission processing unit 105.

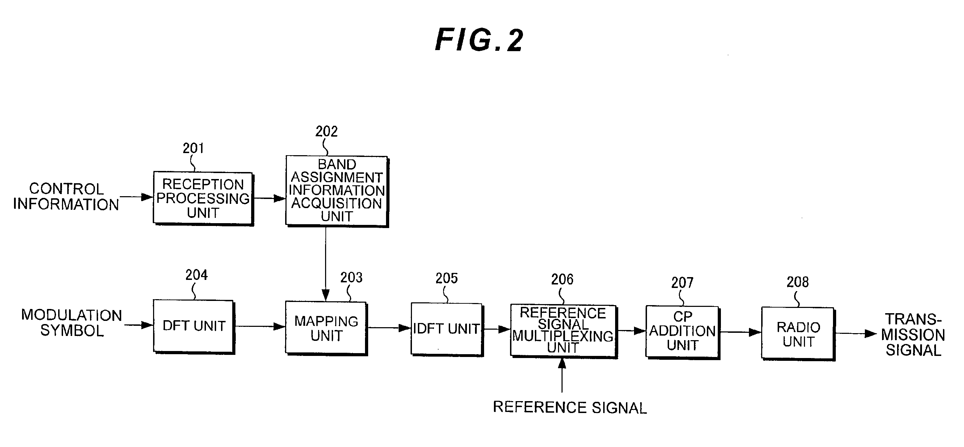

FIG. 2 is a block diagram illustrating an exemplary transmitter configuration of the mobile station apparatus according to the present invention. In FIG. 2, data transmission is performed, based on the band assignment information included in the control information notified to the mobile station apparatus from the base station apparatus. In the mobile station apparatus, the control information is received by a reception processing unit 201. A band assignment information acquisition unit 202 extracts the band assignment information included in the control information and inputs it to a mapping unit 203. Information bits, supposed to be transmission data, are converted into an error correcting code and a modulation symbol and subsequently input to a DFT unit 204. In the DFT unit 204, the modulation symbol is converted from a time domain signal into a frequency domain signal by DFT (Discrete Fourier Transform), and input to the mapping unit 203. The mapping unit 203 allocates the data signal of a frequency domain provided by the DFT unit 204 on a frequency which has been defined based on the band assignment information provided by the band assignment information acquisition unit 202.

The signal allocated in the frequency domain is converted into a signal in the time domain by an IDFT unit 205, and multiplexed with the reference signal in a reference signal multiplexing unit 206. Although the reference signal is multiplexed in the time domain, it may be multiplexed in the frequency domain. The signal with the reference signal multiplexed therein has a CP (Cyclic Prefix) added thereto in a CP addition unit 207, and subsequently converted into a radio signal via a radio unit 208 and transmitted to the base station apparatus. The embodiments illustrated below describe the processes in the band assignment determination unit 103 of the base station apparatus shown in FIG. 1.

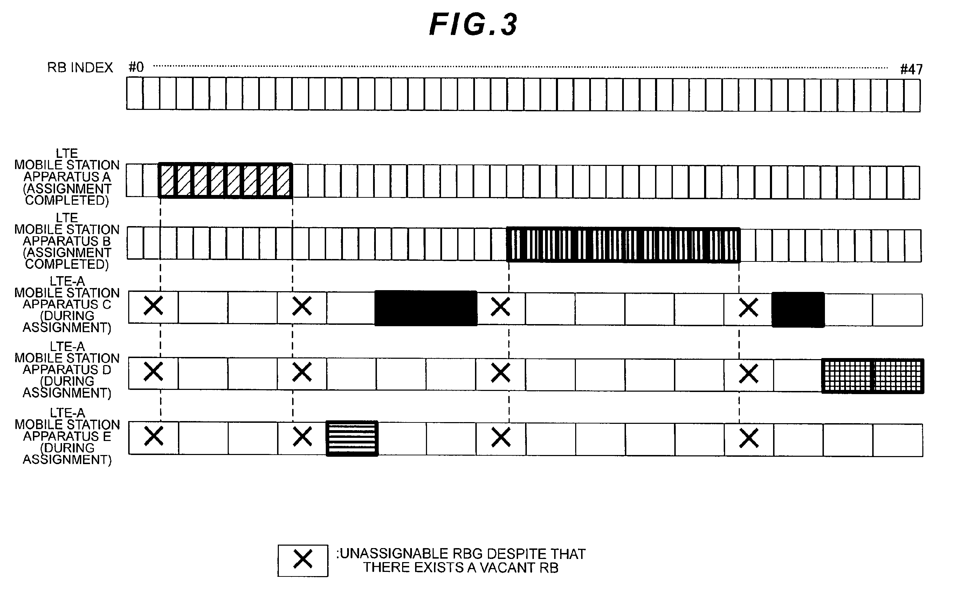

FIG. 3 is an explanatory diagram of an exemplary uplink frequency band assignment to which the embodiments are supposed to be applied. Here, there are LTE mobile station apparatuses A and B providing contiguous allocation in a cell having a system bandwidth of 48 RBs and LTE-A mobile station apparatuses C, D and E providing discrete allocation. It is assumed that, while the base station apparatus is providing scheduling for an LTE mobile station apparatus in units of RB and an LTE-A mobile station apparatus in units of RBG with 1RBG=3RB, two LTE mobile station apparatuses are provided with bands as shown in FIG. 3 and assignment is completed. In this occasion, a situation has occurred that only an LTE-A mobile station apparatus is assignable for remaining vacant bands.

Here, if the assignment band of an LTE mobile station apparatus has been assigned to a part of a specific RBG, the RBG cannot be assigned to an LTE-A mobile station apparatus. In FIG. 3, both ends of the assignment band are assigned only to one RB in the RBG, for both the LTE mobile station apparatuses A and B. Accordingly, two RBs adjacent to an RB which has already been assigned cannot be assigned in the RBG, whereby $(2+2) \times 2 = 8RB$ is an unassignable band. As a result, scheduling is terminated in a state where 16.7% or 8/48 of the system band is unusable, and whereby the spectrum efficiency falls. By applying the following embodiments, it becomes possible to reduce such unusable bands.

[First embodiment]

<Assignment in a subband>

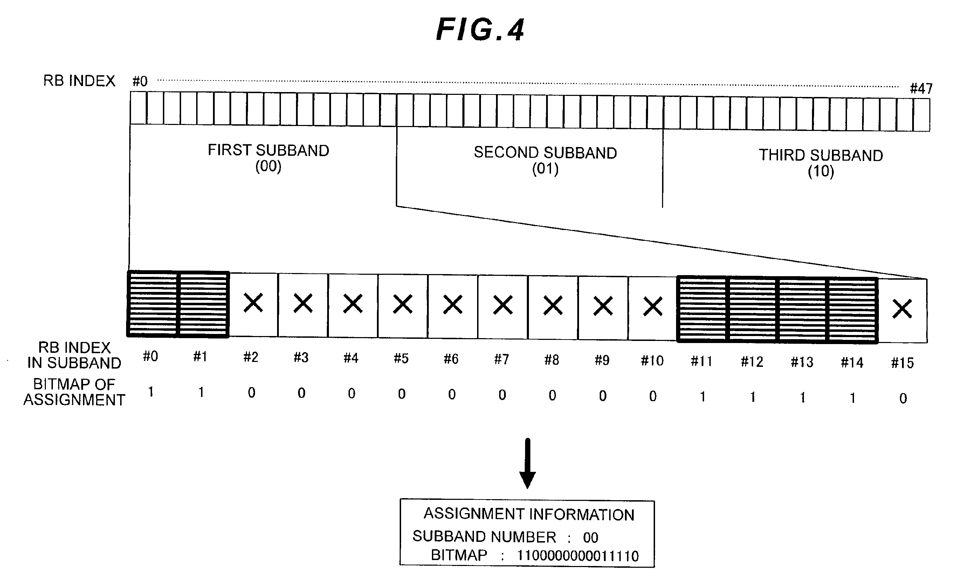

The present embodiment is directed to improve flexibility of scheduling and spectrum efficiency by scaling down the RBG size in assignment provided in units of RBG for a mobile station apparatus with discrete allocation. However, since smaller units of assignment results in increase of RA fields required for assignment information, the present embodiment limits the band supposed to be a candidate of assignment and reduces assignment information by dividing the system band into a plurality of subbands and limiting assignment for a mobile station apparatus to within a single subband. An example of the embodiment will be described referring to FIG. 4.

FIG. 4 illustrates assignment of the LTE-A mobile station apparatus E in FIG. 3 in the first embodiment of the present invention. Assuming that 1RBG =3RB, as in FIG. 3, the LTE-A mobile station apparatus E is assigned only to the RBG index ##4 (RB indices #12 to #14), whereas other RBGs become unassignable bands, and whereby assignment of two or more RBGs cannot be provided.

On the other hand, in the present embodiment, although assignment to the LTE-A mobile station apparatus E is limited within a single subband (subband 00 in FIG. 4) by setting the RBG size to one and the number of subbands to three, assignment can be provided in units of RB and, as a result, RB indices #0, #1 and #11, which were unassignable when the RBG size was 3, can have assignments thereto. The base station apparatus is supposed to notify the mobile station apparatus of, as assignment information, a total of 18 bits, i.e., the 2 bits "00" indicating the first subband and the 16 bits "1100000000011110" indicating the RB index. Accordingly, the mobile station apparatus can suppress increase of assignment information despite that the RB size is reduced by using a subband.

Generalizing the foregoing, the number of bits required for the assignment information is expressed by the following formula, with N being the number of RBs included in the system bandwidth, P' being the changed RBG size, and X being the number of subbands.

$$[\text{Formula 3}]$$

$$\mathrm{ceil}(\log_2 X) + \mathrm{ceil}(N/(P'*X))$$

Here, P' and X may be set to arbitrary values. For example, X= P/P' may be preliminarily set in order to suppress increase of assignment information, or may be set so that the number of bits expressed in formula (3) can be accommodated, depending on the size of the allowed RA field.

In addition, the mobile station apparatus having the present embodiment applied thereto may be all the mobile station apparatuses providing discrete allocation in a cell. Alternatively, the present embodiment may be applied only to a mobile station apparatus at the cell edge where transmit power is limited and a large number of communication bandwidths (the number of RBs) cannot be provided, or a low-priority mobile station apparatus with a communication quality (QoS) that tolerates somewhat delayed data arrival. However, when reducing the RBG size only for some of the mobile station apparatuses, it is desirable that mobile station apparatuses with discrete allocation are assigned in descending order of the RBG size.

In addition, as a method of selecting subbands, the base station apparatus may select a subband that provides the highest characteristic, or may be distributed into a subband having the largest number of vacant bands, depending on the channel characteristics of each of the mobile station apparatuses. Furthermore, a subband may be selected according to the communication performance such as QoS or transmission rate, for example, of the mobile station apparatus.

By applying the present embodiment, it becomes possible to reduce the number of unassignable bands due to difference of units of assignment, and improve the band usage rate.

[Second embodiment]

<Change RBG size by transmission mode>

The present embodiment reduces unassignable band generated due to difference of units of assignment by changing the RBG size to be used for discrete allocation, depending on the transmission mode used in the uplink. Conventional assignment in units of RBG is uniformly determined by the system bandwidth with regard to the RBG size. In other words, all the mobile station apparatuses supposed to be assigned in units of RBG are assigned in units of four RBs in the system band with the RBG size being set to four. In this occasion, when a mobile station apparatus to be assigned in units of RB is assigned to a certain one RB, the RBG including the RB in question becomes unassignable for all the mobile station apparatuses to be assigned in units of RBG, which results in generation of an unassignable band of three RBs.

In the present embodiment, by letting some mobile station apparatuses have an RBG size of two, for example, instead of setting the RBG size of all the mobile station apparatuses to four when providing assignment in units of RBG in the above situation, the conventionally unassignable three RBs are also allowed to be assigned to a mobile station apparatus having an RBG size of two and, as a result, the unassignable band which used to be three RBs can be reduced to one RB.

In LTE and LTE-A, notification of a radio control signal is provided in a DCI format. For example, DCI formats differ according respectively to contiguous band assignment in the uplink or discrete band assignment in the downlink, and the length of bits included is defined by each DCI format. In LTE and LTE-A, with the type of DCI format not being notified, the mobile station apparatus attempts to decode which DCI format is used according to a predefined bit length, and regards the DCI format correctly decoded as the control information addressed to its own apparatus. This process is referred to as blind decoding. In this occasion, since decoding is attempted to all the candidate DCI formats, decoding is attempted for a number of times as many as the number of DCI formats.

Accordingly, the number of times of blind decoding is reduced by defining a classification determined based on the transmission environment such as the number of antennas referred to as a transmission mode in a higher layer, and associating the transmission mode with the DCI format. Therefore, although the difference of the amount of control information due to changing the size of the RBG such as in the present invention is addressed by blind decoding, the transmission mode and the RBG size are associated with each other so as not to increase the number of times.

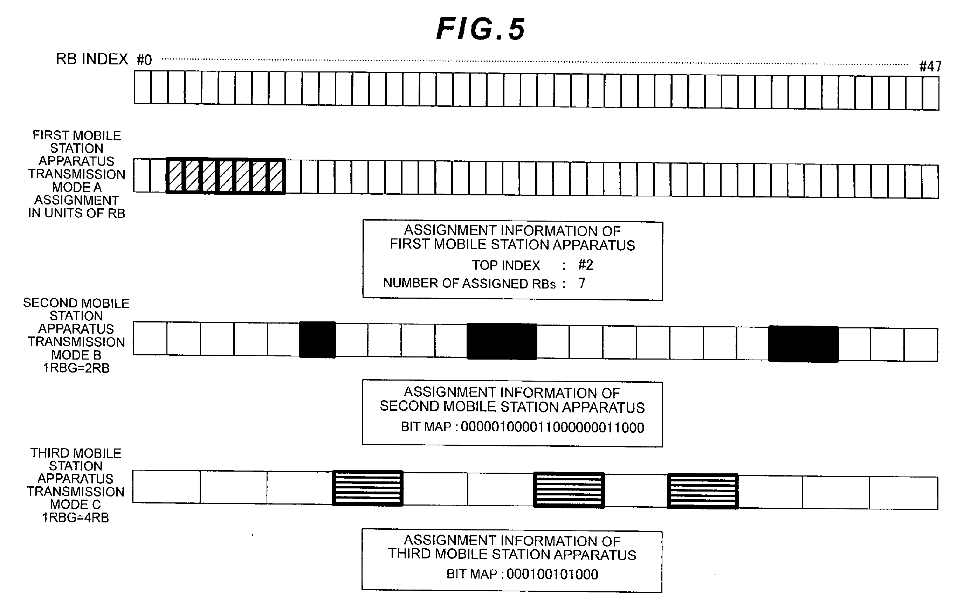

FIG. 5 illustrates an exemplary assignment of an LTE-A mobile station apparatus according to the second embodiment of the present invention. FIG. 5 illustrates an example in which assignment to three mobile station apparatuses with different transmission modes in a cell having a system bandwidth of 48 RBs. It is assumed that the first mobile station apparatus is a mobile station apparatus having a high transmit power at the cell edge (end of cell), for example, and a transmission mode A is employed which provides contiguous allocation in units of one RB. In addition, the second mobile station apparatus employs a transmission mode B allowing relatively a large amount of assignment information, using discrete allocation with 1RBG=2RB being the unit of assignment. In addition, a small amount of assignment information is desirable for the third mobile station apparatus, which employs a transmission mode C with discrete allocation with 1RBG =4RB being the unit of assignment.

In other words, as for the assignment information from the base station apparatus to each of the mobile station apparatuses, the top index and the assigned RB (here, top index:#2, number of assigned RBs:7) are notified to the first mobile station apparatus, a 24-bit bitmap (here, 000001000011000000011000) with 24 RBGs being the candidate of assignment is notified to the second mobile station apparatus, and a 12-bit bitmap (here, 000100101000) with 12 RBGs being the candidate of assignment is notified to the third mobile station apparatus. The first to the third mobile station apparatuses can recognize, from its own transmission mode, the RBG size and whether the allocation is contiguous or discrete, and it becomes possible for them to know the assignment information respectively.

As thus described, in the present embodiment, RBs across the entire system band can be effectively used by associating the transmission mode with the RBG size and setting different values thereto depending on the transmission mode.

[Third embodiment]

<Assign so that assignment of RB matches RBG>

In the present embodiment, when mobile station apparatuses with different minimum units of assignment are assigned in a same system band, the base station apparatus provides scheduling so that units of assignment of all the mobile station apparatuses match that of the mobile station apparatus with the largest unit of assignment.

Occurrence of unassignable bands due to difference of minimum units of assignment has been attributed to the fact that, in a case assuming 1RBG=4RB, for example, a mobile station apparatus supposed to provide assignment in units of RB provides assignment of only one to three RBs to a certain RBG and consequently prevents a mobile station apparatus supposed to provide assignment in units of RBG from providing assignment of the RBG having a vacant RB. This problem can be avoided if it is possible to preliminarily set minimum units of assignment of all the mobile station apparatuses to be identical.

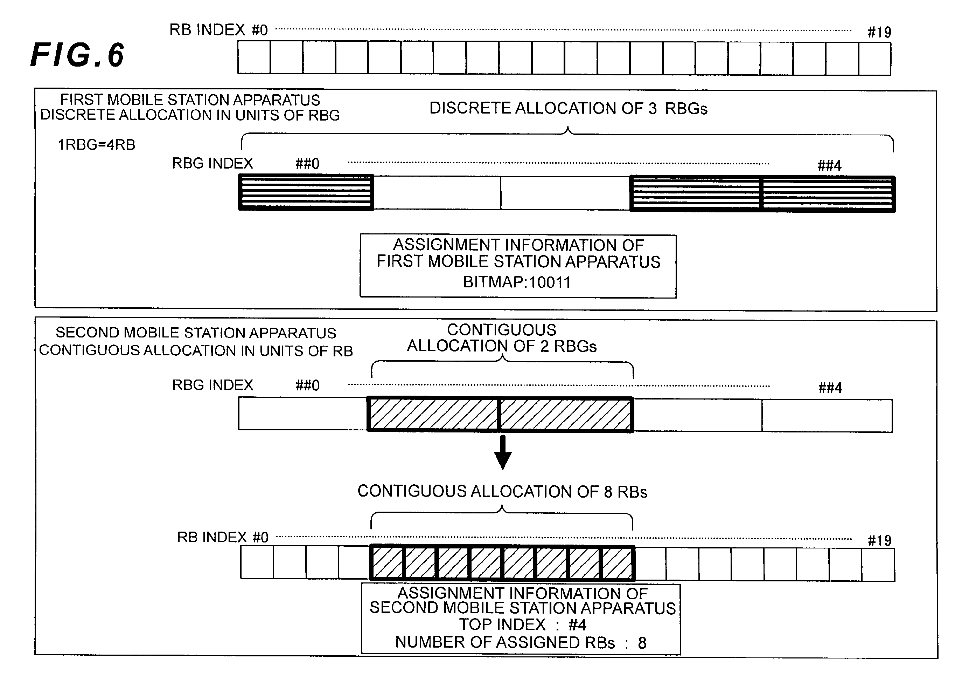

However, backward compatibility with LTE is guaranteed in an LTE-A system, for example, and given that there exists an LTE mobile station apparatus which is allowed for only contiguous allocation in a cell and provides contiguous allocation with an RB being the minimum unit of assignment, if there exists an LTE-A mobile station apparatus which is allowed for discrete allocation in the same cell with an RBG being the minimum unit of assignment, it results in different minimum units of assignment. In the present embodiment, if such a situation may occur, for example, a base station apparatus conforming to LTE-A also provides scheduling for a mobile station apparatus conforming to LTE, with the unit of assignment thereof unified with that of a mobile station apparatus with discrete allocation, and subsequently, generates assignment information in units of RB for an assignment band and notifies it to the mobile station apparatus. A flow of scheduling in the present embodiment will be described referring to FIG. 6.

FIG. 6 illustrates an example in which a first mobile station apparatus allowed for discrete allocation in units of RBG where 1RBG=4RB and a second mobile station apparatus allowed for only contiguous allocation in units of one RB are assigned to a system band with a bandwidth of 20RB, in a third embodiment of the present invention. It is assumed that notification of assignment information of the first mobile station apparatus is provided using a bitmap in units of RBG, and notification of assignment information of the second mobile station apparatus is provided using the leading RB index of the assignment and the number of assigned RB. In this case, the base station apparatus provides scheduling by unifying the units of assignment with the largest 1RBG=4RB, and dividing the 20 RBs of the system band into 5 RBGs, each including 4 RBs.

As a result, RBGs ##0, ##3 and ##4 are assigned to the first mobile station apparatus, and contiguous bands RBGs ##1 and ## 2 are assigned to the second mobile station apparatus. Notification of the assignment information of the first mobile station apparatus can be provided using a bitmap with units in RBG and thus "10011", whereas notification of the second mobile station apparatus must be provided in RB and thus recognition in the RB index is provided for a corresponding assignment band, and as a result, the assignment band of the second mobile station apparatus is contiguously allocated across eight RBs in the range of RB indices #4 to #11, for which the top index #4 and the number 8 of the assigned RBs are notified as the assignment information.

Although the present embodiment shows an exemplary case where the RBG size is 1RBG=4RB, the size of RBG is not limited thereto, and a case where a plurality of RBG sizes coexists can be applied similarly to the present embodiment by unifying the size to the largest RBG size among the all mobile station apparatuses and providing scheduling thereto. In addition, although the units of assignments of the mobile station apparatus using contiguous allocation are unified to match the RBG size in this example, a scheduling may be provided in which, giving a higher priority to the degree of freedom of assignment of mobile station apparatuses with contiguous allocation, assignment is provided so that only the top index of the assignment information matches the RBG size and the number of assigned RB (tail index of assignment) is arbitrarily determined, for example.

By unifying the minimum units of assignment when providing scheduling as with the present embodiment, it is possible to prevent a situation in which assignment is impossible despite that there exists a vacant RB in the RBG.

A program which operates on the mobile station apparatus and the base station apparatus according to the present invention is a program which controls the CPU or the like to realize the functions of the above-mentioned embodiments according to the present invention (program that causes a computer to function). Information processed in such apparatuses is temporarily accumulated in an RAM at the time of the processing, and subsequently stored in various ROMs or HDDs, and read, modified, and written by the CPU as necessary. Recording media that store programs may be any of semiconductor media (e.g., ROM, nonvolatile memory cards, etc.), optical recording media (e.g., DVD, MO, MD, CD, BD, etc.), magnetic storage media (e.g., magnetic tape, flexible disk, etc.).

In addition, the functions of the above-mentioned embodiment are realized not only by executing the loaded program, but also the functions of the present invention may be realized by performing, based on instructions of the program, processes in cooperation with the operating system or other application programs. In addition, when distributing in the market, programs can be stored in a portable recording medium for distribution, or transferred to a server computer connected via a network such as the Internet. In this case, the storage device of the server computer is also included in the present invention.

In addition, a part or all of the mobile station apparatus and the base station apparatus in the above-mentioned embodiments may be implemented as an LSI which is typically an integrated circuit. Each functional block of the mobile station apparatus and the base station apparatus may be individually formed into a chip, or a part or all of them may be integrated into a chip. In addition, the technique of fabricating into an integrated circuit may be realized, without being limited to an LSI, by a dedicated circuit or a general-purpose processor. Additionally, in the advent of a technique for integrated circuit fabrication that replaces the LSI due to progress of semiconductor technology, an integrated circuit according to that technique may be used.

Although embodiments of the present invention has been descried above in detail referring to the drawings, specific configurations are not limited to the embodiments and designs or the like in a range that does not deviate from the scope of the invention are also included in the claims. The present invention can be preferably used for a mobile communication system having a cellular phone device as a mobile station apparatus, although not limited thereto.

Description of Symbols

101 data separation unit
102 channel estimation unit
103 band assignment determination unit
104 control information generation unit
105 transmission processing unit
201 reception processing unit
202 band assignment information acquisition unit
203 mapping unit
204 DFT unit
205 IDFT unit
206 reference signal multiplexing unit
207 CP addition unit
208 radio unit

**Claims**

1. A base station apparatus which performs radio communication with a mobile station apparatus, wherein when a mobile station apparatus with an RB (Resource Block) being a minimum unit of assignment and a mobile station apparatus with an RBG (RB Group) being a minimum unit of assignment coexist, the base station apparatus newly defines a minimum unit of assignment for each of the mobile station apparatuses, determines band assignment, and notifies assignment information to each of the mobile station apparatuses.

2. The base station apparatus according to claim 1, wherein the base station apparatus newly defines the minimum unit by defining the number of RBs constituting an RBG for each mobile station apparatus.

3. The base station apparatus according to claim 2, wherein the base station apparatus determines the number of RBs constituting the RBG, based on a communication bandwidth set for each of the mobile station apparatuses.

4. The base station apparatus according to claim 2, wherein the base station apparatus determines the number of RBs constituting the RBG, based on communication quality of each of the mobile station apparatuses.

5. The base station apparatus according to claim 2, wherein the base station apparatus divides an assignable band into a plurality of subbands, based on the number of RBs constituting the RBG, the number being defined for each of the mobile station apparatuses, assigns the RB or the RBG in any one subband to at least one of the mobile station apparatuses, and also notifies each of the mobile station apparatuses of information specifying the subband and assignment information in the subband.

6. The base station apparatus according to claim 5, wherein the base station apparatus provides assignment to a mobile station apparatus to which assignment is allowed only in the subband, after completion of assignment to a mobile station apparatus other than the mobile station apparatus to which assignment is allowed only in the subband.

7. The base station apparatus according to claim 6, wherein assignment to a mobile station apparatus other than the mobile station apparatus to which assignment is allowed only in the subband is performed in descending order of the number of RBs constituting the RBG, the number being defined for each of the mobile station apparatuses.

8. The base station apparatus according to claim 5, wherein the base station apparatus determines a subband to be assigned, based on channel characteristics of each of the mobile station apparatuses

9. The base station apparatus according to claim 5, wherein the base station apparatus determines a subband to be assigned based on the number of frequencies assignable in the subband.

10. The base station apparatus according to claim 2, wherein the base station apparatus determines the number of RBs constituting the RBG for each of the mobile station apparatuses, based on a transmission mode of each of the mobile station apparatuses.

11. The base station apparatus according to claim 1, wherein the base station apparatus assigns the RB in accordance with the number of RBs constituting the RBG to a mobile station apparatus with the RB being a minimum unit of assignment.

12. The base station apparatus according to claim 1, wherein the base station apparatus assigns the RB to a mobile station apparatus with the RB being a minimum unit of assignment so that at least one of both ends of the assignment band coincides with one end of the RBG.

13. A mobile station apparatus which performs radio communication with the base station apparatus according to any of claims 1 to 12, wherein
the mobile station apparatus is provided with a frequency resource from the base station apparatus to perform radio communication, with an RB (Resource Block) including one or more subcarriers or an RBG (RB Group) including one or more RBs being a minimum unit of assignment.

14. An integrated circuit, when being mounted on a base station apparatus, causing the base station apparatus to perform a plurality of functions, wherein the integrated circuit causes the base station apparatus to perform a series of functions including functions of:

performing radio communication with a mobile station apparatus;
newly defining a minimum unit of assignment for each of the mobile station apparatuses when a mobile station apparatus with an RB (Resource Block) being a minimum unit of assignment and a mobile station apparatus with an RBG (RB Group) being a minimum unit of assignment coexist; and
determining band assignment and notifying each of the mobile station apparatuses of assignment information.

*FIG.1*

RECEIVED
SIGNAL →

101
DATA
SEPARATION
UNIT
→ DATA

102
CHANNEL
ESTIMATION
UNIT

103
BAND
ASSIGNMENT
DETERMINATION
UNIT

104
CONTROL
INFORMATION
GENERATION
UNIT

105
TRANSMISSION
PROCESSING
UNIT
→ CONTROL
INFORMATION

# FIG.2

EP 2 536 236 A1

CONTROL
INFORMATION → | 201 RECEPTION PROCESSING UNIT | → | 202 BAND ASSIGNMENT INFORMATION ACQUISITION UNIT |

MODULATION
SYMBOL → | 204 DFT UNIT | → | 203 MAPPING UNIT | → | 205 IDFT UNIT | → | 206 REFERENCE SIGNAL MULTIPLEXING UNIT | → | 207 CP ADDITION UNIT | → | 208 RADIO UNIT | → TRANS-
MISSION
SIGNAL

REFERENCE SIGNAL

# FIG.3

RB INDEX  #0 ···································································································································· #47

LTE
MOBILE STATION
APPARATUS A
(ASSIGNMENT
COMPLETED)

LTE
MOBILE STATION
APPARATUS B
(ASSIGNMENT
COMPLETED)

LTE-A
MOBILE STATION
APPARATUS C
(DURING
ASSIGNMENT)

| X | | | X | | | X | | | | X | | |

LTE-A
MOBILE STATION
APPARATUS D
(DURING
ASSIGNMENT)

| X | | X | | | X | | | | X | | |

LTE-A
MOBILE STATION
APPARATUS E
(DURING
ASSIGNMENT)

| X | | X | | | X | | | | X | | | |

| X | :UNASSIGNABLE RBG DESPITE THAT
THERE EXISTS A VACANT RB

# FIG.4

EP 2 536 236 A1

# FIG.5

RB INDEX #0 ········································································································································ #47

FIRST MOBILE
STATION
APPARATUS
TRANSMISSION
MODE A
ASSIGNMENT
IN UNITS OF RB

ASSIGNMENT INFORMATION OF
FIRST MOBILE STATION APPARATUS

TOP INDEX     : #2
NUMBER OF ASSIGNED RBs :   7

SECOND MOBILE
STATION
APPARATUS
TRANSMISSION
MODE B
1RBG=2RB

ASSIGNMENT INFORMATION OF
SECOND MOBILE STATION APPARATUS

BIT MAP : 000001000011000000011000

THIRD MOBILE
STATION
APPARATUS
TRANSMISSION
MODE C
1RBG=4RB

ASSIGNMENT INFORMATION OF
THIRD MOBILE STATION APPARATUS

BIT MAP : 000100101000

EP 2 536 236 A1

# FIG.6

RB INDEX #0 ........................................................................................................ #19

FIRST MOBILE STATION APPARATUS
DISCRETE ALLOCATION IN UNITS OF RBG

DISCRETE ALLOCATION OF 3 RBGs

1RBG=4RB

RBG INDEX ##0 ........................................................................ ##4

ASSIGNMENT INFORMATION OF
FIRST MOBILE STATION APPARATUS
BITMAP:10011

SECOND MOBILE STATION APPARATUS
CONTIGUOUS ALLOCATION IN UNITS OF RB

CONTIGUOUS
ALLOCATION OF 2 RBGs

RBG INDEX ##0 ........................................................................ ##4

CONTIGUOUS ALLOCATION OF 8 RBs

RB INDEX #0 ........................................................................................................ #19

ASSIGNMENT INFORMATION OF
SECOND MOBILE STATION APPARATUS
TOP INDEX : #4
NUMBER OF ASSIGNED RBs : 8

EP 2 536 236 A1

## FIG.7

ASSIGNED RB

RB INDEX  #0  #1  #2  #3  #4  #5  #6  #7  #8  #9  → FREQUENCY

ASSIGNMENT INFORMATION

TOP INDEX : #1

NUMBER OF ASSIGNED RBs : 4

## FIG.8

**EP 2 536 236 A1**

<table>
<tr><td colspan="2" align="center"><strong>INTERNATIONAL SEARCH REPORT</strong></td><td>International application No.<br>PCT/JP2011/050570</td></tr>
</table>

A. CLASSIFICATION OF SUBJECT MATTER
*H04W72/04(2009.01)i*

According to International Patent Classification (IPC) or to both national classification and IPC

B. FIELDS SEARCHED

Minimum documentation searched (classification system followed by classification symbols)
H04B7/24-7/26;H04W4/00-99/00;

Documentation searched other than minimum documentation to the extent that such documents are included in the fields searched
| Jitsuyo Shinan Koho | 1922-1996 | Jitsuyo Shinan Toroku Koho | 1996-2011 |
| Kokai Jitsuyo Shinan Koho | 1971-2011 | Toroku Jitsuyo Shinan Koho | 1994-2011 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | Samsung, Control Signaling for Non-Contiguous UL Resource Allocations, 3GPP TSG RAN WG1 #58, R1-093391, 2009.08.28, entire text, all drawings | 1-14 |

☐ Further documents are listed in the continuation of Box C.   ☐ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search<br>02 March, 2011 (02.03.11) | Date of mailing of the international search report<br>15 March, 2011 (15.03.11) |
|---|---|
| Name and mailing address of the ISA/<br>Japanese Patent Office | Authorized officer |
| Facsimile No. | Telephone No. |

Form PCT/ISA/210 (second sheet) (July 2009)

20

**EP 2 536 236 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description

- Evolved Universal Terrestrial Radio Access(E-UTRA) Multiplexing and channel coding. *3GPP TS 36.212 (V8.7.0*